# EUROPEAN PATENT SPECIFICATION

(11) **EP 2 661 122 B1**
(45) Date of publication and mention of the grant of the patent: **07.06.2017**
(21) Application number: 11853337.1
(22) Date of filing: 27.12.2011
(51) Int. Cl.: H04W 36/14, H04L 29/12

(54) **METHOD FOR TRANSCEIVING IP DATA BY PERFORMING HANDOVER BETWEEN HETEROGENEOUS NETWORKS, AND APPARATUS THEREFOR**
VERFAHREN ZUM SENDEN UND EMPFANGEN VON IP-DATEN DURCH ÜBERGABE ZWISCHEN HETEROGENEN NETZEN UND VORRICHTUNG DAFÜR
PROCÉDÉ D'ÉMISSION-RÉCEPTION DE DONNÉES IP EN EFFECTUANT UN TRANSFERT INTERCELLULAIRE ENTRE DES RÉSEAUX HÉTÉROGÈNES, ET APPAREIL POUR CE PROCÉDÉ

(30) Priority: 28.12.2010 US 201061427480 P; 27.12.2011 KR 20110143180
(43) Date of publication of application: 06.11.2013
(73) Proprietor: LG Electronics Inc., Yeongdeungpo-gu Seoul 150-721 (KR)
(72) Inventor: LEE, Seondon, Seoul 153-801 (KR)
(74) Representative: Frenkel, Matthias Alexander
(86) International application number: PCT/KR2011/010174
(87) International publication number: WO 2012/091421

(56) References cited:
- WO-A2-2008/010662
- WO-A2-2008/044215
- KR-A- 20060 109 300
- US-A1- 2008 144 576
- SANGJIN JEONG ET AL: "A Handover Scheme Supporting IPv4-IPv6 Traversal over Network-based Mobility Management Domains", THE 9TH INTERNATIONAL CONFERENCE ON ADVANCED COMMUNICATION TECHNOLOGY, 1 February 2007 (2007-02-01), pages 1033-1036, XP055248474, ISSN: 1738-9445, DOI: 10.1109/ICACT.2007.358534 ISBN: 978-89-551913-1-8
- ETRI: "Fast Mobile IP based handover between 3GPP and non 3GPP access systems", 3GPP DRAFT; S2-061290, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shanghai; 20060502, 2 May 2006 (2006-05-02), XP050255502, [retrieved on 2006-05-02]
- "3rd Generation Partnership Project; Technical Specification Group Core Network and Terminals; Mobility management based on Dual-Stack Mobile IPv6; Stage 3 (Release 10)", 3GPP STANDARD; 3GPP TS 24.303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 21 December 2010 (2010-12-21) , pages 1-49, XP050462347, [retrieved on 2010-12-21]
- ERICSSON: 'Inter access system mobility between 3GPP and non 3GPP access using mobility IPv6' 3GPP TSG SA WG2, S2-052569 07 November 2005, XP050253942
- ERICSSON: 'Refmements to dual stack support' 3GPP TSG SA WG2, S2-082610 07 April 2008, XP050628404

## Description

### [Technical Field]

The present invention relates to a method for transceiving IP data, and more specifically, to a method for transceiving IP data by performing handover between heterogeneous networks and an apparatus therefor.

### [Background Art]

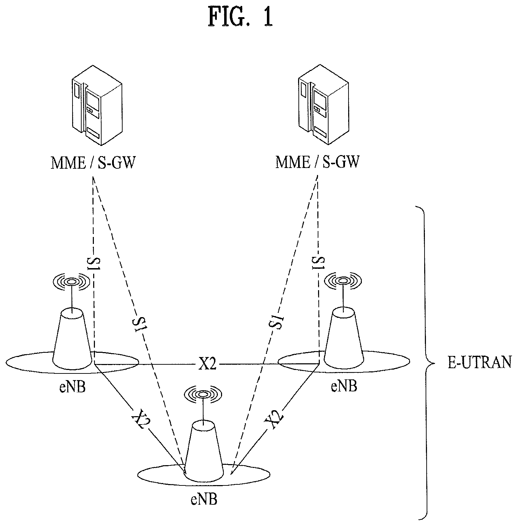

FIG. 1 illustrates a network structure of an E-UMTS (Evolved-Universal Mobile Telecommunications System) which is a mobile communication system.

An E-UMTS is a system evolved from the conventional universal mobile telecommunication system (UMTS) and standardization thereof is currently handled by the 3GPP (3^{rd} Generation Partnership Project). The E-UMTS may be called a long term evolution (LTE) system.

The E-UMTS network may largely be classified into an E-UTRAN (Evolved-UMTS Terrestrial Radio Access Network) and a core network (CN). The E-UTRAN includes a user equipment (UE), an eNB 104, and an access gateway (AG), which is located at an end of the network and is connected to an external network. The AG may be divided into a part for handling user traffic and a part for handling control traffic. An AG for handling new user traffic may communicate with another AG for handling control traffic via a new interface. At least one cell exists per eNB. An interface for transmitting user traffic or control traffic may be located between eNBs. The core network (CN) can include a node for user registration of other UEs and the AG. An interface for discriminating between the E-UTRAN and the CN may also be used. One or more E-UTRAN mobility management entities (MMEs)/serving gateways (S-GWs) may be located at an end of the network and connected to an external network.

Layers of a radio interface protocol between a UE and a network can be classified into a first layer L1, a second layer L2 and a third layer L3 based on three lower layers of an OSI (open system interconnection) standard model widely known in communication systems. A physical layer belonging to the first layer L1 provides an information transfer service using a physical channel. A radio resource control (hereinafter, abbreviated as 'RRC') layer located at the third layer plays a role in controlling radio resources between the UE and the network. For this, the RRC layer enables RRC messages to be exchanged between the UE and the network. The RRC layer may distributively be located at network nodes including the eNode B, AG and the like, or may independently be located at either the eNode B or the AG.

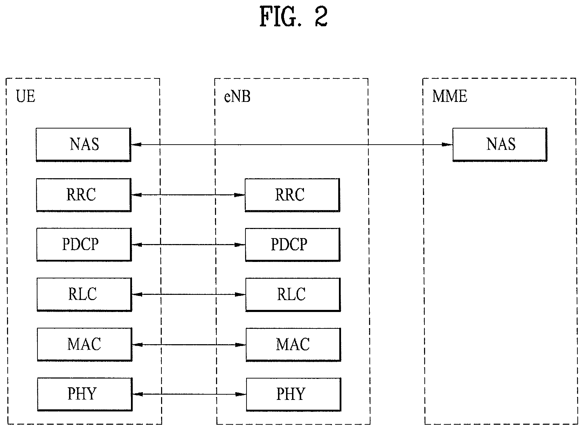

FIG. 2 illustrates a structure of a control plane in the structure of a radio interface protocol between a UE and E-UTRAN based on the 3GPP radio access network standard.

The radio interface protocol of FIG. 2 is horizontally divided into a physical layer PHY, a data link layer and a network layer, and is vertically divided into a user plane for transmitting data information and a control plane for transmitting control signaling. The protocol layers of FIG. 2 may be divided into a first layer (L1), a second layer (L2) and a third layer (L3) based on the three lower layers of the open system interconnection (OSI) standard model which is well-known in the art of communication systems.

The physical layer PHY, which is the first layer, provides an information transfer service to an upper layer by using a physical channel. The physical layer is connected with a medium access control (MAC) layer located at a higher level through a transport channel, and data between the MAC layer and the physical layer is transferred via the transport channel. Between different physical layers, namely, between physical layers of a transmitter and a receiver, data is transferred via the physical channel.

A medium access control (MAC) layer of the second layer provides a service to a radio link control (RLC) layer corresponding to an upper layer through a logical channel. The RLC layer of the second layer supports reliable data transmission. Functions of the RLC layer may be implemented as functional blocks in the MAC layer. In this case, the RLC layer may not be present. A packet data convergence protocol (PDCP) layer of the second layer performs header compression to reduce the size of an IP packet header having relatively large size and containing unnecessary control information in order to effectively transmit IP packets such as IPv4 (Internet Protocol version 4) or IPv6 (Internet Protocol version 6) packets in a radio-communication interval having a narrow bandwidth. In addition, the PDCP layer can perform integrity protection and ciphering upon a control signal such as an RRC signal and/or user data.

A radio resource control (hereinafter, abbreviated as 'RRC') layer located on the uppermost of the third layer is defined in the control plane only and is associated with configuration, re-configuration and release of radio bearers to be in charge of controlling the logical, transport and physical channels. In this case, the radio bearers mean a service provided by the second layer for data transfer between the UE and the UTRAN. The UE is in an RRC-connected mode when the RRC layer of the UE is connected to the RRC layer of the radio network and in an idle mode if not.

A non-access stratum (NAS) layer higher than the RRC layer performs session management and mobility management. An evolved session management (eSM) part belonging to the NAS layer performs default bearer management and dedicated bearer management to control the UE to use a packet service (PS) from the network. A default bearer resource is allocated by the network when a specific packet data network (PDN) is initially accessed. Here, the network allocates an IP address to the UE such that the UE can use data service and assigns QoS of a default bearer.

LTE supports two types of bearers, that is, a bearer having guaranteed bit rate (GBR) QoS that secures a specific bandwidth for data transmission and reception and a non-GBR bearer having best effort QoS. The non-GBR bearer is allocated as a default bearer. In the case of a dedicated bearer, a bearer having GBR or non-GBR QoS can be allocated.

Techniques related to handover of a user equipment between different networks in connection with different supported IP versions are described in the WO 2008/044215 A2.

### [Disclosure]

### [Technical Problem]

An object of the present invention devised to solve the problem lies in a method of transceiving IP (Internet Protocol) data at a UE that has performed handover between heterogeneous networks.

Another object of the present invention is to provide a UE for transceiving IP data by performing handover between heterogeneous networks.

The technical problems solved by the present invention are not limited to the above technical problems and those skilled in the art may understand other technical problems from the following description.

### [Technical Solution]

The object of the present invention can be achieved by providing a method according to claim 1, for transceiving IP data at a UE performing handover between first and second heterogeneous networks. The information on the IP version supported by the UE may be transmitted as a PDN-ID (Packet Data Network-Identification). The message may further include at least one of attach type information and PDN type information. The UE may support one IP version and the PDN type may include the first and second IP versions. The first network may be an LTE (Long Term Evolution) network and the second network may be an eHRPD (evolved High Rate Packet Data) network. The second network node of the second network may be an HSGW (eHRPD Serving Gateway). The message may be of a VSNCP (Vendor Specific Network Control Protocol) control signaling type. The PDN-ID may be a value determined in consideration of an APN (Access Point Name) corresponding to an AP requested by the UE to be connected thereto in addition to the information on the IP version supported by the UE.

In another aspect of the present invention, provided herein is a UE transceiving IP data according to claim 8. The information on the IP version supported by the UE may be transmitted as a PDN-ID. The first modem chip may be is an LTE modem chip and the second modem chip may be an eHRPD modem chip.

### [Advantageous Effects]

In an embodiment according to the present invention, since the eHRPD network is informed of IPv4 as IP version capability of the UE, the eHRPD network need not perform an unnecessary IPv6 stateless address auto-configuration (SLAAC) process, preventing radio resource waste. Furthermore, a user can be allocated and use a wider bandwidth and thus user's satisfaction of a service provided by the network can be improved. In addition, when the UE is multi-PDN-connected to the network, the UE indicates ID of a specific PDN from among multiple PDNs through the IP header so as to reduce a load of operation of identifying the specific PDN and to remarkably increase the processing speed of the UE.

The effects of the present invention are not limited to the above-described effects and other effects which are not described herein will become apparent to those skilled in the art from the following description.

### [Description of Drawings]

The accompanying drawings, which are included to provide a further understanding of the invention, illustrate embodiments of the invention and together with the description serve to explain the principle of the invention. In the drawings:
FIG. 1 illustrates a structure of an evolved universal mobile telecommunications system (E-UMTS) that is a mobile communication system;
FIG. 2 illustrates a control plane structure in a structure of a radio interface protocol between a UE and E-UTRAN based on the 3GPP radio access network standard;
FIG. 3 illustrates an exemplary method of globally allocating a unique IPv6 address through an IPv6 stateless address auto-configuration (SLAAC) process in LTE;
FIG. 4 illustrates an exemplary system structure for operating an LTE system and an eHRPD system;
FIG. 5 illustrates an exemplary process of handover of a UE between heterogeneous networks (e.g. between an LTE network and an eHRPD network);
FIG. 6 is a block diagram illustrating a configuration of a UE supporting handover between heterogeneous networks; and
FIG. 7 illustrates another exemplary process of handover of a UE between heterogeneous networks (e.g. between an LTE network and an eHRPD network).

### [Best Mode]

The invention now will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete and will fully convey the scope of the invention to those skilled in the art. While the following description is given centering on 3GPP LTE/LTE-A by way of example, this is purely exemplary and thus should not be construed as limiting the present invention.

In some cases, to prevent the concept of the present invention from being ambiguous, structures and apparatuses of the known art will be omitted, or will be shown in the form of a block diagram based on main functions of each structure and apparatus. Also, wherever possible, the same reference numbers will be used throughout the drawings and the specification to refer to the same or like parts.

In the following description, the term 'terminal' may be replaced with the term 'user equipment (UE)', 'Mobile Station (MS)', 'advanced MS (AMS)', etc. The term 'base station (BS)' may be replaced with the term 'Node B', 'evolved Node B (eNode B or eNB)', 'Access Point (AP)', etc. While the following description focuses on 3GPP LTE and LTE-A, this is purely exemplary and thus should not be construed as limiting the present invention. Preferred embodiments of the present invention will be described with reference to the attached drawings. This invention may, however, be embodied in many different forms and should not be construed as limited to the embodiments set forth herein. Rather, these embodiments are provided so that this disclosure will be thorough and complete and will fully convey the scope of the invention to those skilled in the art. While the following description is given centering on 3GPP by way of example, this is purely exemplary and thus should not be construed as limiting the present invention.

In a mobile communication system, a UE can receive information via downlink and transmit information via uplink. Information transmitted or received by the UE includes data and control information and various physical channels are present according to type and purpose of information transmitted or received by the UE.

The present invention proposes a method for securing IP address continuity while improving radio resource utilization in E-UMTS evolving from UMTS. Specifically, when a UE supports a dual mode using two modem chips (e.g. an LTE modem chip and a CDMA modem chip), if one of the modem chips (e.g. LTE modem chip) simultaneously supports data paths with respect to IPv4 and IPv6 for a PDN whereas the other (e.g. CDMA modem chip) supports only a data path for IPv4 or IPv6 for a PDN, unnecessary overhead may be generated during handover between heterogeneous networks (e.g. an LTE network and a CDMA network). The present invention proposes a method for solving this problem.

Prior to explanation of various embodiments of the present invention, PDN types are briefly described. There are three types of PDNs: IPv4, IPv6 and IPv4v6. An address allocation method according to each PDN type will now be described.

In an LTE system (or LTE network) providing an IP based packet service (or IP data service), a UE generates default bearer activation through a PDN connectivity procedure during an attach procedure and can be allocated an IP address from the network through this process.

It is mandatory for the network and UE to support IPv4 PDN type. The IPv4 PDN type can specify the following two methods such that the UE can be allocated an IP address through one of the methods. In the first method, the network allocates an IP address to the UE through a NAS signal (e.g. activate default bearer context activation). According to the second method, an IP address can be allocated to the UE through a dynamic host configuration protocol (DHCP) procedure after the attach procedure of the UE. In this case, an arbitrary value such as '0.0.0.0' is designated as an IP address of a NAS signal and allocated to the UE. The UE is allocated the IP address according to the DHCP procedure (RFC 1541) after the attach procedure is ended.

As to the IPv6 PDN type, the network performs an IPv6 SLAAC procedure for global IPv6 address allocation. Specifically, the UE is assigned a 128-bit global IPv6 address by being allocated a 64-bit interface identifier (IID) through a NAS signal during default bearer activation in the attach procedure or PDN connectivity procedure and then being allocated a 64-bit prefix through IPv6 SLAAC procedure.

In the case of IPv4V6 PDN type, the above-mentioned address allocation methods with respect to the IPv4 PDN type and IPv6 PDN type are simultaneously applied.

For reference, an IPv4 address has a size of 16 bits and is represented as four place values discriminated by a dot '.', such as 2341.128.2.1, and one place value is a decimal in the range of 0 to 255. An IPv6 address has a size of 128 bits and is represented as eight place values discriminated by a colon ':', such as 2001:a121:e43:f2e4:2e0:91ff:fe10:4f5b and one place value is a hexadecimal. Here, double colon '::' is used for consecutive 0s, such as 2001:0:0:0:2e0:91ff fe10:4f5b. That is, 2001::2e0:91ff:fe10:4f5b corresponds to 2001:0:0:0:2e0:91ff:fe10:4f5b.

A detailed description will be given of a method of allocating an IPv6 address by a network to a UE in an LTE system. LTE uses IPv6 SLAAC that defines RFC (e.g. RFC4862) and provides a method of allocating an IPv6 address to a UE by applying constrains to IPv6 SLAAC. For example, the IPv6 address allocation method is described through an attach procedure including default bearer activation defined in 3GPP TS23.401 and TS24.301.

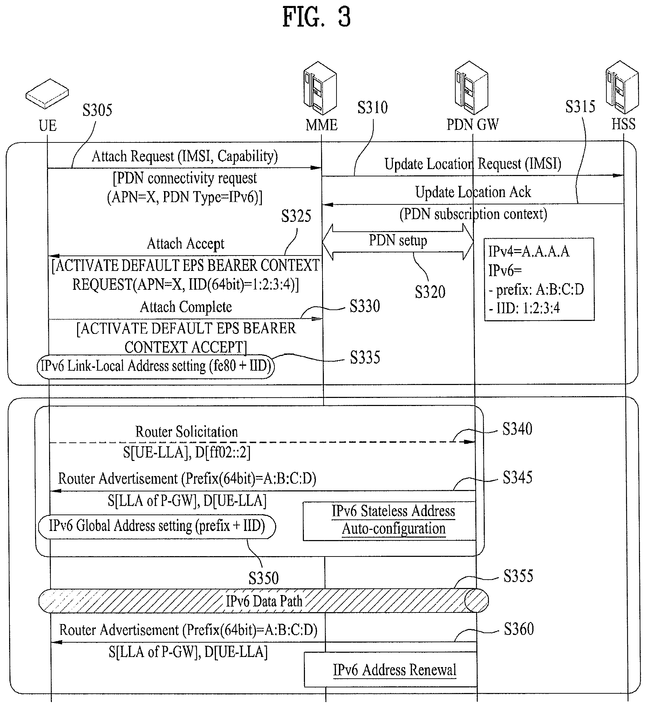

FIG. 3 illustrates an exemplary method of globally allocating a unique IPv6 address through an IPv6 SLAAC procedure in an LTE system.

Referring to FIG. 3, a UE transmits identification information thereof (e.g. international mobile station identity (IMSI)) to a network node (e.g. MME) to be provided with IP data service from an LTE network. The UE can be provided with a service from the network by registering the identification information thereof (e.g. IMSI) in the network through an attach procedure. For this, the UE can deliver an attach request including the identification information and capability information thereof to the MME via an eNB during an attach request procedure (S305). Here, the UE can deliver a PDN connectivity request including PDN type information (i.e. information on an IP version requested by the UE to use (e.g. IPV6)) and access point name (APN) information (e.g. APN='X') to the network node (e.g. MME) through a PDN connectivity procedure (S305). Here, APN is a character string designating a target that is necessary when the UE accesses a mobile network to perform data communication and can indicate IP domain information through which the UE receives IP based data services.

Upon reception of the network attach request from the UE, the network node (e.g. MME) can deliver an update location request message including the identification information (e.g. IMSI) of the UE to another network node (e.g. home subscriber server (HSS)) in order to register the current location of the UE (S310). The HSS can register the identification information of the UE and deliver subscription information of the UE to the MME through an update location acknowledgement message based on the identification information of the UE (S315). The subscription information of the UE may include an IP address, PDN type, etc. which can be used by the UE. Steps S310 and S315 may be omitted if the MME has not been changed when the UE accesses the LTE network.

The MME enables a serving gateway (S-GW) (not shown in FIG. 3), located between the UE and a PDN GW, and the PDN GW to generate default bearers on the basis of the subscription information (e.g. PDN type) received from the HSS and the attach request (e.g. PDN type) received from the UE. During this procedure, the MME acquires information such as the IP address of the UE (S320). In FIG. 3, IPv6 corresponds to the PDN type requested by and allocated to the UE and the PDN GW allocates an IPv6 address to the UE (S320). For example, the PDN GW can allocate an IPv6 address, [Prefix=A:B:C:D IID=1:2:3:4], to the UE.

Here, the PDN GW (P-GW) allocates a 128-bit IPv6 address (i.e. 64-bit prefix and 64-bit IID) to the UE and can transmit the 64-bit IID (e.g. IID=1:2:3:4) and APN information (e.g. APN='X) to the UE through a NAS signal (e.g. activate default EPS bearer context request message) (S325). The UE is allocated the 64-bit IID (e.g. IID=1:2:3:4) after the attach procedure (or default bearer activation) is ended.

The UE can signal the end of the attach procedure to the MME by sending an activate default EPS bearer context accept message to the MME as a response to the activate default EPS bearer context request message (S330). The UE generates a link-local address (LLA) using the 64-bit IID (e.g. IID=1:2:3:4) allocated thereto and a 64-bit prefix (e.g. fe80::) (S335). The UE communicates with another UE (or router) belonging to the same subnet (or the same network link) using the LLA. For example, if IID allocated from the PDN GW is 1:2:3:4, the LLA generated by the UE will be fe80::1:2:3:4.

Subsequently, the UE may receive a router advertisement (RA) message corresponding to an ICMPv6 message from a network node (e.g. PDN GW) (S345). Methods of receiving the RA message include a method in which the UE receives an RA message periodically transmitted from the eNB and a method in which the UE sends router solicitation (RS) that requests RA to the PDN GW (S340) and receiving an RA message as a response to the RS. At this time, the 64-bit prefix allocated to the UE when the PDN GW assigns the IID to the UE during the attach procedure may be transmitted to the UE using an option field of the RA (S345). The UE and the PDN GW may belong to the same subnetwork (or the same link) at a distance of 1 hop from each other and messages such as RS and RA use LLAs as a source address and a destination address.

A destination address (e.g. ff02::2) of the RS message sent from the UE in step S340 can indicate all routers in the same link-local (link-local scope all-router multicast address). When the UE sends the RS message to the PDN GW, the UE does not know the destination address of the PDN GW and thus the UE can use the destination address of the RS message, ff02:2, to acquire the RA message. Here, since the PDN GW receives the RS message from the UE and the source address of the received RS message corresponds to the IID allocated from the PDN GW, the PDN GW embeds a prefix value corresponding to the received IID in the RA message and transmits the RA message to the UE. Since the UE knows the presence of a router through this process in RFC, the process is called a router discovery process.

The UE is allocated the 128-bit global IPv6 address using the 64-bit prefix value included in the RA message acquired from the PDN GW and the 64-bit IID allocated through the access procedure (S350). That is, the UE is assigned the global address by performing IPv6 SLAAC using the IID allocated thereto (S350). A global unique prefix is allocated to the UE in the LTE system. For reference, while the LLA uses the IID allocated by the network node (e.g. PDN GW), the lower 64-bit value (i.e. IID) of the global IPv6 address may use an arbitrary value that is not allocated from the network node (e.g. PDN GW).

The UE may transmit/receive data through an IPv6 data path using the IP address allocated from the PDN GW (S355). To renew the IPv6 address allocated to the UE, the PDN GW may periodically transmit the RA message to the UE at specific intervals (S360).

The UE may be provided with a data transmission/reception service from a plurality of PDN GWs by connecting with the plurality of PDN GWs through an additional PDN connectivity procedure. In this case, the UE may be additionally allocated an IP address and can transmit/receive data to/from the plurality of PDN GWs using multiple PDN connections.

While FIG. 3 illustrates connection to a single PDN GW through a PDN connectivity procedure to transmit/receive data, the UE may be connected to a plurality of PDN GWs through an additional PDN connectivity procedure to transmit/receive to/from the plurality of PDN GWs. In this case, the UE may be additionally allocated an IP address. The UE can transmit/receive data to/from multiple PDN GWs using multiple PDN connections by performing the process of FIG. 3 for each of the multiple PDN GWs.

A description will be given of a system employing evolved high rate packet data (eHRPD) developed to enable HRPD technology (or 1x-EVDO technology) of CDMA, which is a 3GPP2 technology, to be handled in a core network of LTE.

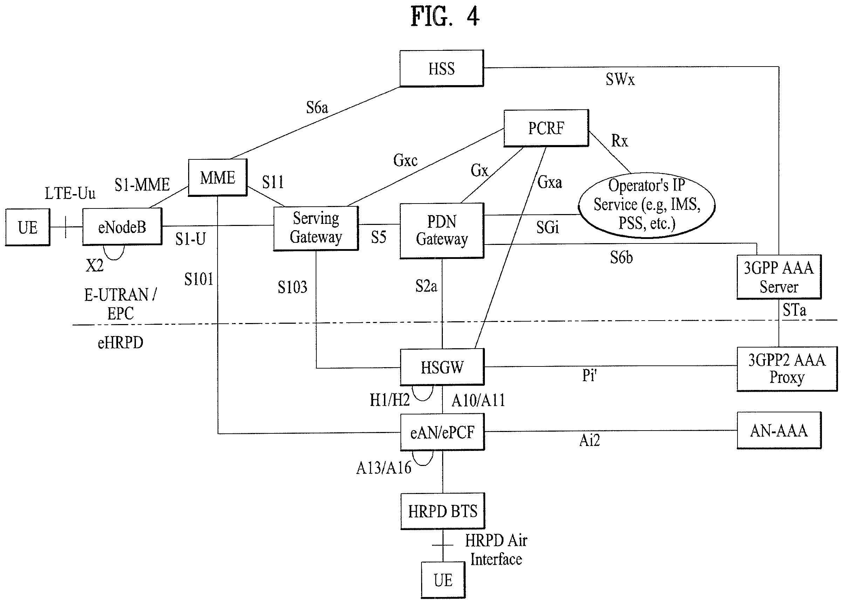

FIG. 4 illustrates a system architecture for mutual operation of an LTE system and an eHRPD system.

Referring to FIG. 4, an eHRPD serving gateway (HSGW) provides a data path between a UE connected to the eHRPD system (or eHRPD network) and a PDN GW of the LTE network and charges for user data. In particular, the HSGW maintains IP service continuity for the UE using proxy mobile IPv6 (PMIPv6). For example, when the UE performs handover (or handoff) from the LTE network to the eHRPD network, the HSGW acquires the IP address of the UE, used in the LTE network, through the PDN GW using PMIP and then re-allocates the IP address to the UE. This enables the UE to perform communication in the eHRPD network using the IP address used in the LTE network and thus user data can be transmitted/received seamlessly.

In FIG. 4, an evolved access network (eAN) provides radio resource allocation and control of the eHRPD network and an evolved packet control function (ePCF) transmits data of the UE to the HSGW and controls transmission of data of the UE.

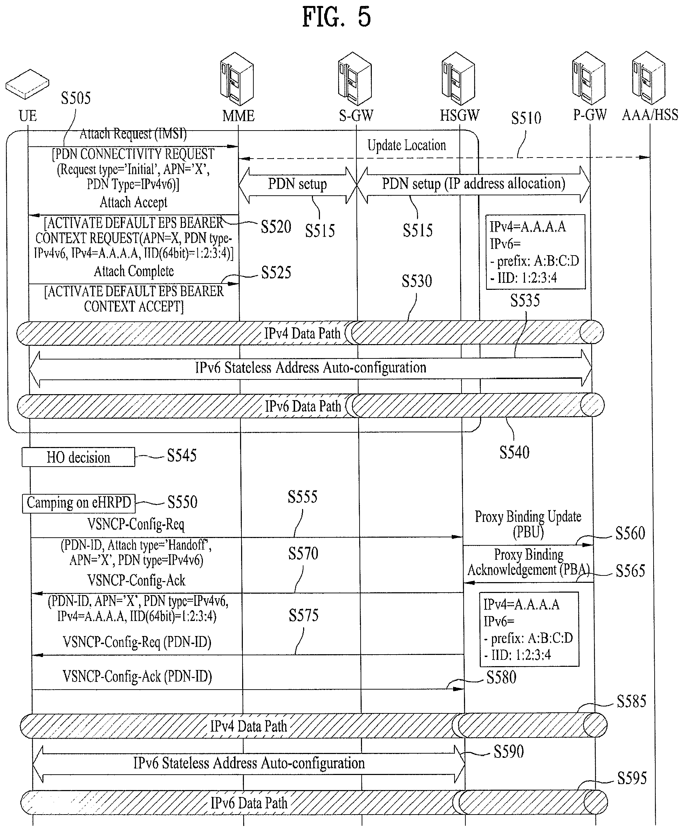

FIG. 5 illustrates an exemplary process of handover of a UE between heterogeneous networks (e.g. handover from an LTE network to an eHRPD network).

Referring to FIG. 5, to receive IP data service from the LTE network, the UE finds an LTE cell and transmits identification information (e.g. an international mobile station identify (IMSI)) thereof to a network node (e.g. MME). The UE registers the identification information thereof (e.g. IMSI) in the network through an attach procedure in order to receive the service from the network. For registration, the UE can deliver an attach request including the identification information and capability information thereof to the network node (e.g. MME) via an eNB (S505). Here, the UE can transmit a PDN connectivity request including a PDN type, that is, an IP version (e.g. IPv4v6) requested and to be used by the UE , APN (e.g. APN='X') and request type (e.g. request type=initial access) to the MME through a PDN connectivity procedure (S505).

Upon reception of the attach request from the UE, the MME can deliver an update location request message including the identification information (e.g. IMSI) of the UE to another network node (e.g. AAA/HSS) to perform a location update procedure in order to register the current location of the UE (S510). An S-GW performs a PDN setup procedure (e.g. IP address allocation) with a P-GW (PDN-GW) and the MME performs a PDN setup procedure with the S-GW (S515). Here, the P-GW can allocate an IPv4 address and an IPv6 address with respect to the IP version (e.g. IPv4v6) requested and to be used by the UE to the UE (S515). For example, the P-GW can allocate an IPv6 address of [Prefix=A:B:C:D IID=1:2:3:4] and an IPv4 address of A.A.A.A to the UE.

The P-GW allocates a 128-bit IPv6 address (i.e. 64-bit prefix plus 64-bit IID) to the UE. Here, the P-GW can deliver the 64-bit IID (e.g. IID=1:2:3:4) of the IPv6 address, the IPv4 address, APN (e.g. APN='X') and PDN type (e.g. IPv4v6) to the UE through a NAS signal (e.g. activate default EPS bearer context request message) (S520). The UE can send an activate default EPS bearer context accept message to the MME as a response to the activate default EPS bearer context request message to inform the MME that the attach procedure has been ended (S525).

The UE can transmit/receive data to/from the P-GW through an IPv4 data path using the IPv4 address (e.g. A.A.A.A) allocated thereto (S530). Then, the UE performs IPv6 SLAAC using the IID allocated thereto to be allocated the IPv6 address (S35). The UE transmits/receives data to/from the P-GW through an IPv6 data path using the IPv6 address allocated thereto (S540).

The UE may decide to hand over from the network from which the UE currently receives the data service using the IPv4 address and the IPv6 address to a heterogeneous network (S545). The following description is based on the assumption that the UE decides to hand over from the LTE network from which the UE currently receives the data service to an eHRPD network. This handover between heterogeneous networks can be performed by instructions of a serving eNB or according to decision of the UE.

If the UE is instructed by the network to perform handover, the UE can decide to perform handover by explicitly receiving an RRC message directing handover or movement to a CDMA network, such as 'MobilityFromEUTRACommand' or 'RRCConnectionRelease' message, from the LTE network. The UE may decide to hand over to a heterogeneous network (e.g. eHRPD network) in order to continue data communication when the cell of the network from which the UE has received the service is not available any more (e.g. when the cell is considered to be lost due to received signal strength being considerably lower than a specific threshold value).

Upon determination of handover, the UE can acquire and camp on a cell corresponding to a heterogeneous network (e.g. eHRPD network) (S550). Here, the UE can be attached to the eHRPD network through a specific message (e.g. vendor specific network control protocol (VSNCP) control signaling). The UE can designate an attach type as 'handover' and designate the APN (APN='X') corresponding to the AP to which the UE has been connected in the LTE network and the PDN type allocated thereto as IPv4v6 to maintain the data service used in the LTE network. The UE can deliver a 'VSNCP-Config-Req' message including the PDN type, APN and attach type to a network node (e.g. HSGW) (S555). Here, the UE may also transmit information on the IP address previously allocated thereto in the LTE network (S555).

During this procedure, the UE can assign a PDN identifier (PDN-ID) to the PDN to which the UE is connected. When the UE is attached to multiple PDNs, the UE can discriminate between network connections using PDN-ID. In addition, PDN-ID is attached to every generated data such that the PDN through which the corresponding data is transmitted/received is identified. The UE may further include the PDN-ID in the 'VSNCP-Config-Req' message and deliver the 'VSNCP-Config-Req' message to the network node (e.g. HSGW) (S555).

Upon reception of the attach request (i.e. 'VSNCP-Config-Req' message), the HSGW informs the P-GW that the UE continuously uses the service allocated thereto through a proxy binding update procedure (S560). The P-GW sends a proxy binding acknowledgement as a response to the HSGW (S565). Then, the HSGW can allocate the same IP address (i.e. IPv4 address and IPv6 address) used in the LTE network to the UE. That is, the HSGW can transmit a 'VSNCP-Config-Ack' message including the PDN type, IPv4 address and IPv6 address allocated to the UE, and APN to the UE (S570).

Furthermore, the HSGW can embed PDN-ID in a 'VSNCP-Config-Ack' message and transmit the same to the UE (S575) and the UE can send a 'VSNCP-Config-Ack' message including PDN-ID to the HSGW as an acknowledgement response (S580).

Then, the UE can transmit/receive data to/from the eHRPD network through an IPv4 data path using the same IPv4 address as used in the LTE network (S585). The UE can be allocated the same IID as that used in the LTE network. The UE is allocated the IPv6 address through IPv6 SLAAC using the IID allocated thereto (S590). Through this procedure, the UE can transmit/receive data to/from the HRPD network through an IPv6 data path using the same IPv6 address as that used in the LTE network.

Even if the UE hands over back to the LTE network from the eHRPD network, the UE can be allocated the same IP address through a method similar to the above-described procedure and thus service connectivity can be maintained.

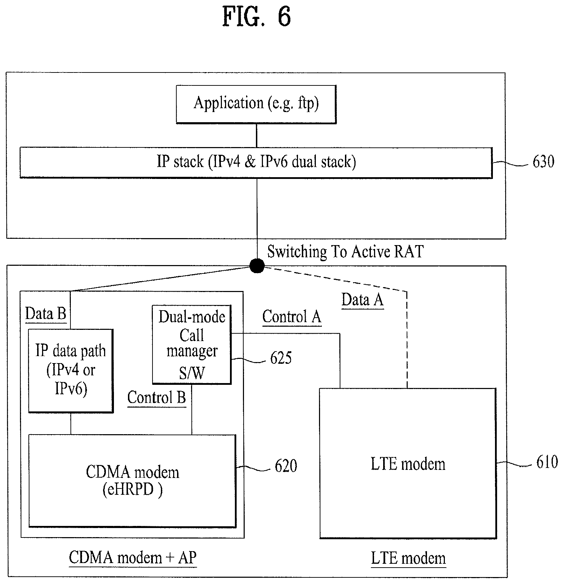

FIG. 6 is a block diagram illustrating a configuration of a UE supporting handover between heterogeneous networks according to the present invention.

Referring to FIG. 6, the UE may include an LTE modem chip 610, a CDMA modem chip 620 and an IP stack module 630.

The LTE modem chip 610 transmits and processes signals using LTE and supports dual IP. The LTE modem chip 610 having LTE modem functions can support the IPv4 or IPv6 version or simultaneously support two IP versions such as IPv4v6 for one PDN connection. Since the LTE modem chip 610 can support dual IP, the UE can provide services to the user using both the IPv4 and IPv6 for one PDN connection when receiving services from an LTE network.

The CDMA modem chip 620 transmits and processes signals using CDMA and supports single IP. Accordingly, when the UE receives services from an eHRPD network, the CDMA modem chip 620 can provide data service to the user using only one of the IPv4 and IPv6 versions. The CDMA modem chip 620 provides an eHRPD modem function and an application processor (AP) function. The CDMA modem chip 620 supports only a data path for one IP version (i.e. IPv4 or IPv6) for one PDN. The CDMA modem chip 620 includes MSM 6800.

While FIG. 6 shows that the CDMA modem chip 620 includes a dual mode controller 625 performing dual mode control, the present invention is not limited thereto and the dual mode controller 625 may be located inside the LTE modem chip 610 or outside the LTE and CDMA modem chips 610 and 620.

The IP stack module 630 supports IP service of the UE. For example, the IP stack module 630 may be a Windows operating system and may be implemented as an application processor (AP) in a smartphone. While the IP stack module 630 may be disposed in each of the LTE and CDMA modem chips 610 and 620, IP service may be provided using an AP located outside each of the LTE and CDMA modem chips 610 and 620, as shown in FIG. 6.

A description will be given of a handover process when a UE using a specific radio access technology, that is, LTE supports both IPv4 and IPv6 data paths for one PDN connection whereas a UE using eHRPD can support one IP version only. As described above with reference to FIG. 5, a UE initially accessing the LTE network can simultaneously support IPv4 and IPv6 and thus the UE designates IPv4v6 as a PDN type to be allocated an IPv4 address and an IPv6 address from the LTE network and performs data transmission/reception. If the UE hands over to the eHRPD network, the UE attempts to transmit the PDN type in the LTE network, IPv4v6, to the eHRPD network to achieve service connectivity.

In this situation, when the UE hands over to the eHRPD network through the CDMA modem chip 620 that can support only a data path with respect to one IP version (e.g. IPv4), only the IPv4 version can be actually used by the user (e.g. application or application program) even though the UE requests the eHRPD network to establish PDN connection by signaling the PDN type, IPv4v6, to the eHRPD network. Accordingly, the IPv6 SLAAC procedure (S350 of FIG. 3 and S590 of FIG. 5) for IPv6 address allocation becomes unnecessary. Therefore, if the network unnecessarily performs a process of sending an RA advertisement (S345 and S350 of FIG. 3) to the UE though the UE cannot use the IPv6 address, radio resources are remarkably wasted.

Hence, a description will be given of a method of preventing radio resource waste that may occur when the UE simultaneously supports data paths with respect to two IP versions of IPv4 and IPv6 for a PDN connection through one of two radio access technologies, for example, LTE, and supports only a data path with respect to only one IP version for a PDN connection according to the other (e.g. radio access technology used in an eHRPD network) during handover between heterogeneous networks (e.g. LTE network and eHRPD network).

Specifically, according to the present invention, when the UE hands over from the LTE network to the eHRPD network and is attached to the eHRPD network, the UE requests the eHRPD network to establish PDN connection using PDN-ID indicating the IP version of a data path that can be supported by the UE because the LTE network supports both data paths with respect to IPv4 and IPv6 for one PDN connection whereas the eHRPD network supports only one data path with respect to IPv4 or IPv6. To achieve this, the UE uses different PDN-IDs depending on capabilities of data paths of IP versions supported by the UE when attached to the eHRPD network.

The network node (HSGW in FIG. 5) does not perform the IPv6 address allocation procedure (IPv6 SLAAC) and IPv6 address update operation when a PDN-ID used by the UE for a PDN connectivity request corresponds to PDN-ID that does not support IPv6. That is, the UE informs the network node (e.g. HSGW) whether the UE simultaneously supports the IPv4 and IPv6 versions or of an IP version corresponding to a data path supported by the UE after handover from the LTE network to the eHRPD network such that the network node (e.g. HSGW) does not unnecessarily waste radio resources.

Table 1 shows capability of a data path according to IP version of the UE using PDN-ID proposed by the present invention. For reference, PDN-ID has values in the range of 0 to 14 according to 3GPP2. It is assumed that PDN-ID values and data path capabilities according to IP version, which correspond to the PDN-ID values, are previously shared by a UE and a network.

**[Table 1]**

| IP version capability | PDN ID | | | | |
|---|---|---|---|---|---|
| | APN A | APN B | APN C | APN D | APN E |
| IPv4, IPv6 | 0 | 3 | 6 | 9 | 12 |
| IPv4 | 1 | 4 | 7 | 10 | 13 |
| IPv6 | 2 | 5 | 8 | 11 | 14 |

The UE accesses the LTE network using the PDN type of IPv4v6 since data paths with respect to IPv4 and IPv6 are simultaneously supported (it is assumed that the UE is attached to the LTE network using an APN of 'APN_A'). When the UE hands over to the eHRPD network and only a data path for IPv4 is supported, the UE can inform the eHRPD network that only data transmission with respect to IPv4 is supported using '1' as a PDN-ID value, as shown in Table 1, when accessing the eHRPD network. In the LTE network, IP addresses corresponding to IPv4 and IPv6 are allocated to the UE and IPv6 SLAAC for the IPv6 address is performed. However, in the eHRPD network to which the UE has handed over, only the IPv4 address is allocated to the UE and IPv6 SLAAC that is an additional IPv6 address allocation procedure is omitted since the eHRPD network has no IPv6 capabilities. In Table 1, APN_A, APN_B, etc. represent specific APNs.

When the UE that is multi-PDN connected to the LTE network hands over to the eHRPD network, multiple PDN-IDs are used according to connected PDNs (i.e. APN). Specifically, if only a data path corresponding to IPv4 can be used as a data path using APN_A for handover to the eHRPD network, PDN-ID corresponding to the data path, '1' is used for connection, as shown in Table 1. If a data path available for APN_B corresponds to IPv6, '5' can be used for additional connection.

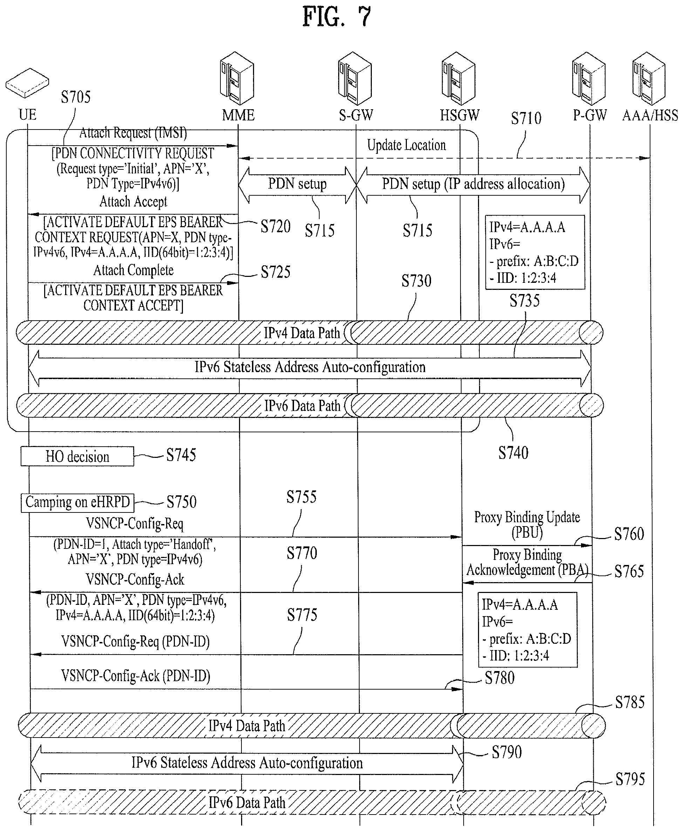

A description will be given of an example of using PDN-IDs based on data path capabilities according to IP version proposed by the present invention with reference to FIG. 7.

FIG. 7 illustrates another exemplary process of handover of a UE between heterogeneous networks (e.g. from an LTE network to an eHRPD network).

For the process of FIG. 7, it is assumed that 1) the UE hands over to an eHRPD network in the course of accessing a specific APN (e.g. APN_A of Table 1) in the LTE network, receiving IPv4 and IPv6 addresses and performing communication and IPv4 or IPv6 is supported for one PDN, 2) a PDN-ID indicating capability of a data path corresponding to an IP version is implicitly agreed between the UE and the network, and 3) both data paths with respect to IPv4 and IPv6 are supported for one PDN in the LTE network whereas only the data path corresponding to IPv4 is supported in the eHRPD network.

Referring to FIG. 7, steps S705 and S750 correspond to S505 and S550 of FIG. 5. However, the APN is assumed to be APN_A. The UE can be attached to the eHRPD network through VSNCP control signaling.

The UE designates the attach type as 'handover' and designates the APN (here, APN_A) corresponding to the AP to which the UE has been connected in the LTE network and PDN type allocated thereto as IPv4v6 in order to maintain services used in the LTE network. The UE uses '1' as a PDN-ID value according to Table 1 since the UE supports only the IPv4 data path (S755). The UE can transmit a'VSNCP-Config-Req' message including the PDN type, APN (e.g. APN_A), attach type and PDN-ID (i.e. PDN-ID='1') to a network node (e.g. HSGW) (S755). Here, the UE may also transmit information on the IP address previously allocated thereto in the LTE network (S755).

Upon reception of an attach request (i.e. 'VSNCP-Config-Req' message), the HSGW informs a PDN GW that the UE continuously uses the service allocated thereto through a proxy binding update procedure and allocates the same IP address used in the LTE network to the UE. During this process, the UE can communicate with the eHRPD network using the same IPv4 address used in the LTE network.

Since the UE designates '1' as the PDN-ID value (that is, data path capability for IPv6 is not supported), the HSGW does not unnecessarily transmit a message for IPv6 SLAA, such as 'Router Advertisement', to the UE. In this manner, the UE informs the eHRPD network of IP version capabilities corresponding to IPv4 that can be supported by the UE, and thus the eHRPD network does not perform an unnecessary operation such as IPv6 SLAAC, preventing radio resource waste. This enables allocation of a wider bandwidth to the user to improve user satisfaction in using the service received from the network. When the UE is multi-PDN-connected to the network, the UE indicates ID of a specific PDN from among multiple PDNs through the IP header so as to reduce a load of operation of identifying the specific PDN and to remarkably increase the processing speed of the UE. The UE reduces transfer delay due to data processing, improving user satisfaction in using the service received from the network.

Since the HSGW maintains the IPv4 address and IPv6 address through the proxy binding update/proxy binding acknowledgement procedures, even if the UE hands over back to the LTE network from the eHRPD network, the UE can perform data transmission/reception in the LTE network through a method similar to the above-mentioned process using the IP address used in the eHRPD network.

While FIG. 7 illustrates handover of the UE from the LTE network to the eHRPD network, the process of FIG. 7 can also be applied to a case in which the UE hands over from the eHRPD network to the LTE network.

While FIGS. 5 and 7 illustrate processes of connecting the UE to a single PDN, the UE may access a plurality of PDN GWs (P-GWs) through an additional PDN connection procedure to transmit/receive data to/from the plurality of PDN GWs. In this case, the UE can be additionally allocated an IP address and can transmit/receive data to/from multiple PDN GWs using multiple PDN connections.

The embodiments of the present invention described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present invention or included as a new claim by subsequent amendment after the application is filed.

Those skilled in the art will appreciate that the present invention may be carried out in other specific ways than those set forth herein. The above embodiments are therefore to be construed in all aspects as illustrative and not restrictive.

### [Industrial Applicability]

The above-described IP data transceiving method and apparatus therefor can be industrially used in various manners.

## Claims

1. A method for transceiving IP data by a UE performing handover between first and second heterogeneous networks, the method comprising:
transceiving (S730, S740) data to/from a first network node of a first network using an IP address of an IPv4 and an IP address of an IPv6,
wherein the IP address of the IPv4 and the IP address of the IPv6 are assigned for the UE by the first network,
wherein the first network simultaneously supports data transmission paths of the IPv4 and the IPv6,
wherein the first network and a second network are heterogeneous from each other, and
wherein the second network supports data transmission path of the IPv4 or the IPv6;
after a handover from the first network node of the first network to the second network is decided (S745), transmitting (S755) a message containing information regarding the IPv4 and the IPv6 assigned by the first network, information regarding the IP address of the IPv4 and the IP address of the IPv6 and information indicating which of the IPv4 and the IPv6 can be supported by the UE in the second network, to a second network node of the second network;
receiving (S770), from the second network node of the second network, an IP address of the IPv4 or an IP address of the IPv6 assigned by the second network, and
transceiving (S785) data to/from the second network node of the second network using the IP address of the IPv4 or the IP address of the IPv6 assigned by the second network,
wherein the IP address of the IPv4 assigned by the second network is the same as the IP address of the IPv4 assigned by the first network prior to handover, or
wherein the IP address of the IPv6 assigned by the second network is the same as the IP address of the IPv6 assigned by the first network prior to handover.

2. The method according to claim 1, wherein the information indicating which of the IPv4 and the IPv6 can be supported by the UE in the second network is transmitted as a PDN-ID, Packet Data Network-Identification.

3. The method according to claim 1, wherein the message further includes attach type information.

4. The method according to claim 1, wherein the first network is an LTE, Long Term Evolution, network and the second network is an eHRPD, evolved High Rate Packet Data, network.

5. The method according to claim 1, wherein the second network node of the second network is an HSGW, eHRPD Serving Gateway.

6. The method according to claim 1, wherein the message is a VSNCP, Vendor Specific Network Control Protocol, control signaling type.

7. The method according to claim 2, wherein the PDN-ID is a value determined in consideration of an APN, Access Point Name, corresponding to an AP requested by the UE to be connected thereto in addition to the information indicating which of the IPv4 and the IPv6 can be supported by the UE in the second network.

8. A UE transceiving IP data, comprising:
a first modem chip (610) configured to transmit/receive data to/from a first network node of a first network using an IP address of an IPv4 and an IP address of an IPv6,
wherein the IP address of the IPv4 and the IP address of the IPv6 are assigned for the UE by the first network,
wherein the first network simultaneously supports data transmission paths of the IPv4 and the IPv6,
wherein the first network and a second network are heterogeneous from each other, and
wherein the second network supports data transmission path of the IPv4 or the IPv6;
an IP stack module (630) configured to:
transmit a message containing information regarding the IPv4 and the IPv6 assigned by the first network, information regarding the IP address of the IPv4 and the IP address of the IPv6 and information indicating which of the IPv4 and the IPv6 can be supported by UE in the second network after a handover from the first network node of the first network to the second network is decided, and
receive, from the second network node of the second network, an IP address of the IPv4 or an IP address of the IPv6 assigned by the second network; and
a second modem chip (620) configured to transmit/receive data to/from the second network node of the second network using the IP address of the IPv4 or the IP address of the IPv6 assigned by the second network,
wherein the IP address of the IPv4 assigned by the second network is the same as the IP address of the IPv4 assigned by the first network prior to handover, or
wherein the IP address of the IPv6 assigned by the second network is the same as the IP address of the IPv6 assigned by the first network prior to handover.

9. The UE according to claim 8, wherein the information indicating which of the IPv4 and the IPv6 can be supported by the UE in the second network is transmitted as a PDN-ID.

10. The UE according to claim 8, wherein the first modem chip (610) is an LTE modem chip and the second modem chip (620) is an eHRPD modem chip.

## Patentansprüche

1. Verfahren zum Senden oder Empfangen von IP-Daten mittels eines Benutzerendgeräts, UE, das Verbindungsübergabe zwischen einem ersten und einem zweiten heterogenen Netzwerk durchführt, wobei das Verfahren umfasst:
Senden oder Empfangen (S730, S740) von Daten zu/von einem ersten Netzwerkknoten eines ersten Netzwerks unter Verwendung einer IP-Adresse eines IPv4 und einer IP-Adresse eines IPv6,
wobei die IP-Adresse des IPv4 und die IP-Adresse des IPv6 für das UE mittels des ersten Netzwerks zugewiesen sind,
wobei das erste Netzwerk gleichzeitig Datenübertragungspfade des IPv4 und des IPv6 unterstützt,
wobei das erste Netzwerk und ein zweites Netzwerk heterogen zueinander sind, und
wobei das zweite Netzwerk einen Datenübertragungspfad des IPv4 oder des IPv6 unterstützt;
nachdem auf eine Verbindungsübergabe von dem ersten Netzwerkknoten des ersten Netzwerks zu dem zweiten Netzwerkknoten entschieden worden ist (S745), Senden (S755) einer Nachricht, die Informationen bezüglich des IPv4 und des IPv6, die mittels des ersten Netzwerks zugewiesen sind, Informationen bezüglich der IP-Adresse des IPv4 und der IP-Adresse des IPv6 und Informationen, die darauf hinweisen, welches des IPv4 und des IPv6 mittels des UE in dem zweiten Netzwerk unterstützt werden kann, enthält, zu einem zweiten Netzwerkknoten des zweiten Netzwerks;
Empfangen (S770), von dem zweiten Netzwerkknoten des zweiten Netzwerks, einer IP-Adresse des IPv4 oder einer IP-Adresse des IPv6, die mittels des zweiten Netzwerks zugewiesen ist, und
Senden oder Empfangen (S785) von Daten zu/von dem zweiten Netzwerkknoten des zweiten Netzwerks unter Verwendung der IP-Adresse des IPv4 oder der IP-Adresse des IPv6, die mittels des zweiten Netzwerks zugewiesen ist,
wobei die IP-Adresse des IPv4, die mittels des zweiten Netzwerks zugewiesen ist, dieselbe ist wie die IP-Adresse des IPv4, die mittels des ersten Netzwerks vor der Verbindungsübergabe zugewiesen worden ist, oder
wobei die IP-Adresse des IPv6, die mittels des zweiten Netzwerks zugewiesen ist, dieselbe ist wie die IP-Adresse des IPv6, die mittels des ersten Netzwerks vor der Verbindungsübergabe zugewiesen worden ist.

2. Verfahren nach Anspruch 1, wobei die Informationen, die darauf hinweisen, welches des IPv4 und des IPv6 mittels des UE in dem zweiten Netzwerk unterstützt werden kann, als ein Paketdaten-Netzwerk-Identifikator, PDN-ID, gesendet wird.

3. Verfahren nach Anspruch 1, wobei die Nachricht ferner Anhang-Typ-Informationen enthält.

4. Verfahren nach Anspruch 1, wobei das erste Netzwerk ein Langzeitevolutions-, LTE-, Netzwerk ist und das zweite Netzwerk ein Entwickeltes-Hochraten-Paketdaten-, eHRPD-, Netzwerk ist.

5. Verfahren nach Anspruch 1, wobei der zweite Netzwerkknoten des zweiten Netzwerks ein eHRPD-dienendes Gateway, HSGW, ist.

6. Verfahren nach Anspruch 1, wobei die Nachricht ein Verkäuferspezifisches-Netzwerksteuerungsprotokoll-, VSNCP-, Steuerungssignalisierungstyp ist.

7. Verfahren nach Anspruch 2, wobei der PDN-ID ein Wert ist, der unter Berücksichtigung eines Zugangspunkt-Namens, APN, bestimmt ist entsprechend einem AP, der mittels des UE angefordert ist, um damit verbunden zu werden, zusätzlich zu den Informationen, die darauf hinweisen, welches des IPv4 und des IPv6 mittels des UE in dem zweiten Netzwerk unterstützt werden kann.

8. UE, das IP-Daten sendet oder empfängt, umfassend:
einen ersten Modemchip (610), der dazu ausgebildet ist, Daten zu senden/empfangen zu/von einem ersten Netzwerkknoten eines ersten Netzwerks unter Verwendung einer IP-Adresse eines IPv4 und einer IP-Adresse eines IPv6,
wobei die IP-Adresse des IPv4 und die IP-Adresse des IPv6 für das UE mittels des ersten Netzwerks zugewiesen sind,
wobei das erste Netzwerk gleichzeitig Datenübertragungspfade des IPv4 und des IPv6 unterstützt,
wobei das erste Netzwerk und ein zweites Netzwerk heterogen zueinander sind, und
wobei das zweite Netzwerk einen Datenübertragungspfad des IPv4 oder des IPv6 unterstützt;
ein IP-Stapelmodul (630), das ausgebildet ist:
nachdem auf eine Verbindungsübergabe von dem ersten Netzwerkknoten des ersten Netzwerks zu dem zweiten Netzwerk entschieden worden ist, eine Nachricht zu senden, die Informationen bezüglich des IPv4 und des IPv6, das mittels des ersten Netzwerks zugewiesen ist, Informationen bezüglich der IP-Adresse des IPv4 und der IP-Adresse des IPv6 und Informationen, die darauf hinweisen, welches des IPv4 und des IPv6 mittels des UE in dem zweiten Netzwerk unterstütz werden kann, enthält, und
von dem zweiten Netzwerkknoten des zweiten Netzwerks eine IP-Adresse des IPv4 oder eine IP-Adresse des IPv6 zu empfangen, die mittels des zweiten Netzwerks zugewiesen ist; und
einen zweiten Modemchip (620), der dazu ausgebildet ist, Daten zu/von dem zweiten Netzwerkknoten des zweiten Netzwerks zu senden/empfangen unter Verwendung der IP-Adresse des IPv4 oder der IP-Adresse des IPv6, die mittels des zweiten Netzwerks zugewiesen ist,
wobei die IP-Adresse des IPv4, die mittels des zweiten Netzwerks zugewiesen ist, dieselbe ist wie die IP-Adresse des IPv4, die mittels des ersten Netzwerks vor der Verbindungsübergabe zugewiesen worden ist, oder
wobei die IP-Adresse des IPv6, die mittels des zweiten Netzwerks zugewiesen ist, dieselbe ist wie die IP-Adresse des IPv6, die mittels des ersten Netzwerks vor der Verbindungsübergabe zugewiesen worden ist.

9. UE gemäß Anspruch 8, wobei die Informationen, die darauf hinweisen, welches des IPv4 und des IPv6 mittels des UE in dem zweiten Netzwerk unterstützt werden kann, als ein PDN-ID gesendet sind.

10. UE nach Anspruch 8, wobei der erste Modemchip (610) ein LTE-Modemchip und der zweite Modemchip (620) ein eHRPD-Modemchip sind.

## Revendications

1. Procédé de transmission-réception de données IP par un UE exécutant un transfert intercellulaire entre des premier et deuxième réseaux hétérogènes, le procédé comprenant :
la transmission-réception (S730, S740) de données à un/d'un premier noeud de réseau d'un premier réseau en utilisant une adresse IP d'un IPv4 et une adresse IP d'un IPv6,
dans lequel l'adresse IP de l'IPv4 et l'adresse IP de l'IPv6 sont affectées pour l'UE par le premier réseau,
dans lequel le premier réseau supporte simultanément des chemins de transmission de données de l'IPv4 et de l'IPv6,
dans lequel le premier réseau et un deuxième réseau sont hétérogènes l'un par rapport à l'autre, et
dans lequel le deuxième réseau supporte un chemin de transmission de données de l'IPv4 ou de l'IPv6 ;
après qu'un transfert intercellulaire du premier noeud de réseau du premier réseau vers le deuxième réseau a été décidé (S745), la transmission (S755) d'un message contenant des informations se rapportant à l'IPv4 et l'IPv6 affectés par le premier réseau, des informations se rapportant à l'adresse IP de l'IPv4 et l'adresse IP de l'IPv6 et des informations indiquant lequel de l'IPv4 et de l'IPv6 peut être supporté par l'UE dans le deuxième réseau, à un deuxième noeud de réseau du deuxième réseau ;
la réception (S770), du deuxième noeud de réseau du deuxième réseau, d'une adresse IP de l'IPv4 ou d'une adresse IP de l'IPv6 affectée par le deuxième réseau, et
la transmission-réception (S785) de données au/du deuxième noeud de réseau du deuxième réseau en utilisant l'adresse IP de l'IPv4 ou l'adresse IP de l'IPv6 affectée par le deuxième réseau,
dans lequel l'adresse IP de l'IPv4 affectée par le deuxième réseau est la même que l'adresse IP de l'IPv4 affectée par le premier réseau avant le transfert intercellulaire, ou
dans lequel l'adresse IP de l'IPv6 affectée par le deuxième réseau est la même que l'adresse IP de l'IPv6 affectée par le premier réseau avant le transfert intercellulaire.

2. Procédé selon la revendication 1, dans lequel les informations indiquant lequel de l'IPv4 et de l'IPv6 peut être supporté par l'UE dans le deuxième réseau sont transmises comme une PDN-ID, identification de réseau à commutation de paquets de données.

3. Procédé selon la revendication 1, dans lequel le message inclut en outre des informations de type d'attachement.

4. Procédé selon la revendication 1, dans lequel le premier réseau est un réseau LTE, évolution à long terme, et le deuxième réseau est un réseau eHRPD, commutation de paquets de données haut débit évolué.

5. Procédé selon la revendication 1, dans lequel le deuxième noeud de réseau du deuxième réseau est une HSGW, passerelle de desserte eHRPD.

6. Procédé selon la revendication 1, dans lequel le message est un type de signalisation de commande de VSNCP, protocole de commande de réseau spécifique au fournisseur.

7. Procédé selon la revendication 2, dans lequel la PDN-ID est une valeur déterminée en considérant un APN, nom de point d'accès, correspondant à un AP demandé par l'UE pour être connecté à celui-ci, outre les informations indiquant lequel de l'IPv4 et de l'IPv6 peut être supporté par l'UE dans le deuxième réseau.

8. UE transmettant/recevant des données IP, comprenant :
une première puce modem (610) configurée pour transmettre/recevoir des données à un/d'un premier noeud de réseau d'un premier réseau en utilisant une adresse IP d'un IPv4 et une adresse IP d'un IPv6,
dans lequel l'adresse IP de l'IPv4 et l'adresse IP de l'IPv6 sont affectées pour l'UE par le premier réseau,
dans lequel le premier réseau supporte simultanément des chemins de transmission de données de l'IPv4 et de l'IPv6,
dans lequel le premier réseau et un deuxième réseau sont hétérogènes l'un par rapport à l'autre, et
dans lequel le deuxième réseau supporte un chemin de transmission de données de l'IPv4 ou de l'IPv6 ;
un module (630) de pile IP configuré pour :
transmettre un message contenant des informations se rapportant à l'IPv4 et l'IPv6 affectés par le premier réseau, des informations se rapportant à l'adresse IP de l'IPv4 et l'adresse IP de l'IPv6 et des informations indiquant lequel de l'IPv4 et de l'IPv6 peut être supporté par l'UE dans le deuxième réseau après qu'un transfert intercellulaire du premier noeud de réseau du premier réseau vers le deuxième réseau a été décidé, et
recevoir, du deuxième noeud de réseau du deuxième réseau, une adresse IP de l'IPv4 ou une adresse IP de l'IPv6 affectée par le deuxième réseau ; et
une deuxième puce modem (620) configurée pour transmettre/recevoir des données au/du deuxième noeud de réseau du deuxième réseau en utilisant l'adresse IP de l'IPv4 ou l'adresse IP de l'IPv6 affectée par le deuxième réseau,
dans lequel l'adresse IP de l'IPv4 affectée par le deuxième réseau est la même que l'adresse IP de l'IPv4 affectée par le premier réseau avant le transfert intercellulaire, ou
dans lequel l'adresse IP de l'IPv6 affectée par le deuxième réseau est la même que l'adresse IP de l'IPv6 affectée par le premier réseau avant le transfert intercellulaire.

9. UE selon la revendication 8, dans lequel les informations indiquant lequel de l'IPv4 et de l'IPv6 peut être supporté par l'UE dans le deuxième réseau sont transmises comme une PDN-ID.

10. UE selon la revendication 8, dans lequel la première puce modem (610) est une puce modem LTE et la deuxième puce modem (620) est une puce modem eHRPD.
